(19) Europäisches Patentamt
European Patent Office
Office européen des brevets

(11) EP 4 752 946 A1

(12) EUROPEAN PATENT APPLICATION

(43) Date of publication:
**03.06.2026 Bulletin 2026/23**

(21) Application number: **25218217.5**

(22) Date of filing: **25.11.2025**

(51) International Patent Classification (IPC):
***H01M 4/13*** *(2010.01)* ***H01M 4/78*** *(2006.01)*
***H01M 10/0525*** *(2010.01)* ***H01M 10/0567*** *(2010.01)*

(52) Cooperative Patent Classification (CPC):
**H01M 10/0567; H01M 4/13; H01M 4/78; H01M 10/0525;** H01M 2004/021; H01M 2004/028; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.11.2024 CN 202411708051**

(71) Applicant: **Zhuhai CosMX Battery Co., Ltd.**
**Zhuhai, Guangdong 519180 (CN)**

(72) Inventors:
- **WU, Yuanji**
  **Zhuhai, Guangdong 519180 (CN)**
- **XIANG, Hanqing**
  **Zhuhai, Guangdong 519180 (CN)**
- **LI, Xiping**
  **Zhuhai, Guangdong 519180 (CN)**

(74) Representative: **Murgitroyd & Company**
**165-169 Scotland Street**
**Glasgow G5 8PL (GB)**

# (54) LITHIUM-ION BATTERY

(57) Disclosed is a lithium-ion battery. The lithium-ion battery comprises a cell and an electrolyte, wherein the cell comprises a positive electrode plate, a separator, and a negative electrode plate that are stacked, wherein the positive electrode plate body has a first surface and a second surface opposite to each other in a thickness direction, and the positive electrode plate has a plurality of protruding portions on the first surface and recessed portions corresponding to the protruding portions on the second surface; and the electrolyte comprises A wt % of a sulfur-containing additive, which comprises at least one of a sulfonate, a sulfate, and a sulfite, with the lithium-ion battery satisfying $0.3 \leq H/T \leq 6$ and $0.1 \leq A \leq 6$; where H is the height of the protruding portion, in μm; and T is the thickness of the separator, in μm. The lithium-ion battery has both good electrochemical performance and safety.



Processed by Luminess, 75001 PARIS (FR)

## Description

## TECHNICAL FIELD

The present invention relates to the technical field of lithium-ion batteries, in particular to a lithium-ion battery.

## BACKGROUND

Lithium-ion batteries are widely used in various portable electronic devices due to the advantages of a high energy density and a long cycling life. In fast-paced societies, consumers have increasingly higher demands for the charging efficiency and endurance time of the battery. Battery engineers have developed various battery material technologies and electrode plate posttreatment techniques to improve the kinetic performance and energy density of lithium-ion batteries, such as the use of nano-scale positive and negative electrode materials and ultra-thin separators, the development of high-kinetics electrolytes, and embossing, perforation, and line engraving to the electrode plate.

The electrode plate embossing technology improves the kinetics and electrolyte storage capacity of lithium-ion batteries to a certain extent, thereby improving the cycling life of lithium-ion batteries. However, after embossing the positive electrode, the stress at the protruding portions of the positive electrode plate was too high, which compresses the separator. Moreover, the tips of some protruding portions may pierce the separator, thinning the separator in the corresponding regions and shortening the distance between the positive and negative electrodes, which leads to excessive self-discharge of the lithium-ion battery. Additionally, the negative electrode regions corresponding to the protruding positions are prone to lithium plating and the formation of lithium dendrites, leading to short circuits and failing to meet the requirements for commercial applications. Therefore, there is an urgent need to solve these problems caused by the electrode plate embossing technology, to obtain high-performance lithium-ion batteries by using the electrode plate embossing technology.

## SUMMARY

An object of the present invention is to overcome the above problems existing in the prior art by providing a lithium-ion battery that has both good electrochemical performance and safety, can suppress the formation of lithium dendrites on the negative electrode, while improving the self-discharge performance of the lithium-ion battery.

To achieve the above object, the present invention provides a lithium-ion battery. The lithium-ion battery comprises a cell and an electrolyte, wherein the cell comprises a positive electrode plate, a separator, and a negative electrode plate that are stacked, wherein the positive electrode plate body has a first surface and a second surface opposite to each other in a thickness direction, and the positive electrode plate has a plurality of protruding portions on the first surface and recessed portions corresponding to the protruding portions on the second surface; and the electrolyte comprises A wt % of a sulfur-containing additive, which comprises at least one of a sulfonate, a sulfate, or a sulfite, with the lithium-ion battery satisfying $0.3 \leq H/T \leq 6$ and $0.1 \leq A \leq 6$; where H is the height of the protruding portion, in $\mu$m; and T is the thickness of the separator in $\mu$m;

In the present invention, the above technical solutions are used and have the following beneficial effects: the positive electrode plate of the lithium-ion battery of the present invention comprises a plurality of protruding portions and corresponding recessed portions, and combined with an appropriate amount of sulfur-containing additives added to the electrolyte, under the condition that specific relationships are satisfied, the lithium-ion battery has good electrochemical performance and safety, and a high energy density, can suppress the formation of lithium dendrites on the negative electrode, while improving the self-discharge performance of the lithium-ion battery.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein. In the present disclosure, unless otherwise specified, all the numerical ranges are inclusive of the endpoints.

## BRIEF DESCRIPTION OF THE DRAWINGS

FIG. 1 shows a schematic diagram of a cell according to the present invention.
FIG. 2 shows a schematic diagram of a positive electrode plate according to the present invention.
FIG. 3 shows a schematic diagram of a positive electrode plate according to the present invention.

FIG. 4 shows a partial cross-sectional schematic diagram of a positive electrode plate according to the present invention.

**List of reference signs:**

1. Positive electrode plate; 2. Separator; 3. Negative electrode plate; 11. First surface; 12. Positive electrode current collector; 13. Second surface; 14. Protruding portion; 15. Recessed portion.

**DETAILED DESCRIPTION OF THE EMBODIMENTS**

Hereinafter, specific embodiments of the present disclosure will be described in detail. It should be understood that the specific embodiments described herein are only used to illustrate and explain the present disclosure and are not used to limit the present disclosure.

Unless otherwise defined, all scientific and technical terms used in the present invention have the same meanings as commonly understood by those skilled in the technical field to which the present invention relates.

The present invention provides a lithium-ion battery. The lithium-ion battery comprises a cell and an electrolyte, wherein the cell comprises a positive electrode plate, a separator, and a negative electrode plate that are stacked, wherein the positive electrode plate body has a first surface and a second surface opposite to each other in a thickness direction, and the positive electrode plate has a plurality of protruding portions on the first surface and recessed portions corresponding to the protruding portions on the second surface; and the electrolyte comprises A wt % of a sulfur-containing additive, which comprises at least one of a sulfonate, a sulfate, or a sulfite, with the lithium-ion battery satisfying $0.3 \leq H/T \leq 6$ (for example, 0.3, 0.5, 1, 1.5, 2, 2.5, 3, 3.5, 4, 4.5, 5, 5.5, or 6) and $0.1 \leq A \leq 6$ (for example, 0.1, 0.5, 1, 1.5, 2, 2.5, 3, 3.5, 4, 4.5, 5, 5.5, or 6); where H is the height of the protruding portion, in $\mu$m; and T is the thickness of the separator in $\mu$m;

It was found in researches that when the relationship between the height of the protruding portions and the thickness of the separator is controlled to satisfy $0.3 \leq H/T \leq 6$, the formation of lithium dendrites on the negative electrode can be suppressed, such that the risk of short circuits caused by lithium dendrites in the negative electrode regions corresponding to the protruding portions piercing the separator can be reduced, and the self-discharge performance of the lithium-ion battery can also be improved. When the height of the protruding portions on the positive electrode plate is relatively small and the thickness of the separator is relatively large, the amount of electrolyte decreases in the later stage of the cycling, the kinetic performance of the lithium-ion battery deteriorates, and lithium plating is more likely to occur. When the height of the protruding portions is relatively large and the thickness of the separator is small, the stress at the protruding portions is greater, resulting in an excessively high self-discharge rate, and the lithium dendrites in the negative electrode regions corresponding to the protruding portions are also more likely to pierce the separator, leading to short circuits or an excessively high self-discharge rate. Furthermore, when an appropriate amount of sulfur-containing additives are added to the electrolyte in combination, the sulfur-containing additives have excellent film-forming ability on both the positive and negative electrodes, such that a relatively flexible CEI film is formed at the protruding portions of the positive electrode plate, reducing the stress exerted by the protruding portions of the positive electrode plate on the separator and mitigating the self-discharge effect at the tip of the protruding portions. After forming a film on the negative electrode using the sulfur-containing additives, an organic-inorganic composite SEI film with good elasticity and lithium-ion conductivity is formed, including for example, lithium alkyl sulfates, lithium alkyl sulfonates, lithium sulfate, or lithium sulfite, such that the negative electrode still has good kinetic performance after film formation, and the film formed by sulfur-containing additives on the positive electrode enables the control of the uniformly extraction of lithium ions to some extent, preventing localized concentrated release of lithium ions. As a result, the growth of lithium dendrites is suppressed, thereby reducing the risk of battery short circuits and improving the cycling performance of the battery.

In the present invention, the positive electrode plate can be prepared by an embossing process to obtain a positive electrode plate containing a plurality of protruding portions and corresponding recessed portions. It can be understood that the corresponding arrangement of the recessed portions and protruding portions means that the projection of the protruding portions in the thickness direction of the electrode plate at least partially overlaps with the projection of the recessed portions in the same direction, and the former can completely cover the latter, or the latter completely covers the former, or the two overlap in partial regions. In some embodiments, the projection area of the protruding portions in the thickness direction of the electrode plate is 80% to 120% of the projection area of the recessed portions in the thickness direction of the electrode plate (for example, 80%, 90%, 100%, 110%, or 120%).

In the present invention, H is the height of the protruding portions, in the maximum height difference that exists in the first surface in the thickness direction of the positive electrode plate (e.g., the direction as indicated by z in FIG. 4), that is, the distance between the highest point of the protruding portions and the planar region of the first surface of the electrode plate, as illustrated by H in FIG. 4; and T is the thickness of the separator, which can be measured in the dimension of the separator in the direction of the thickness of the positive electrode plate.

In some embodiments, $3 \leq H \leq 40$, e.g., 3, 5, 10, 15, 20, 25, 30, 35, or 40.

In some embodiments, 5≤T≤12, e.g., 5, 6, 7, 8, 9, 10, 11, or 12, that is, the thickness of the separator is 5-12 μm, e.g., 5 μm, 6 μm, 7 μm, 8 μm, 9 μm, 10 μm, 11 μm, or 12μm. The separator may comprise a base film and optionally a coating located on at least one side of the base film, wherein the coating layer may be an inorganic particle layer, an adhesive layer or a combination thereof. The composition of the separator is a conventional composition in the art and may be selected by a person skilled in the art as desired.

In some embodiments, 2 ≤ H/A ≤ 100, for example, 2, 5, 10, 15, 20, 25, 30, 40, 60, 80, or 100. When the height of the protruding portions is small and a high amount of the sulfur-containing additive is added, lithium plating tends to occur in the later stages of cycling due to electrolyte depletion and excessively thick films on the positive and negative electrode surfaces, and the cycling performance deteriorates. When the height of the protruding portions is high and a lower content of the sulfur-containing additive is added, the protruding portions of the positive electrode plate have more cracks, which makes it impossible to form a CEI film with a sufficient and uniform thickness; and the stresses exerted by the protruding portions on the separator is still high, and the self-discharge rate of lithium-ion batteries is still relatively fast, which makes it impossible to effectively suppress the risk of short circuits caused by lithium dendrites piercing the separator.

In the present invention, the sulfur-containing additive includes at least one of a sulfonate, a sulfate or a sulfite. In some embodiments, the sulfur-containing additive is a cyclic sulfur-containing compound.

In some embodiments, the sulfur-containing additive comprises at least one of compounds represented by formula 1-1 through formula 1-14;

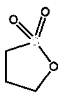 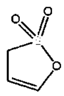 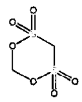 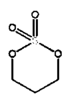 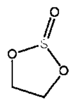 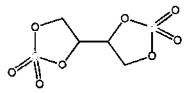

formula 1-1, formula 1-2, formula 1-3, formula 1-4, formula 1-5, formula 1-6,

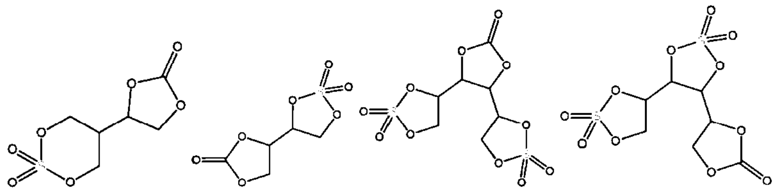

formula 1-7, formula 1-8, formula 1-9, formula 1-10,

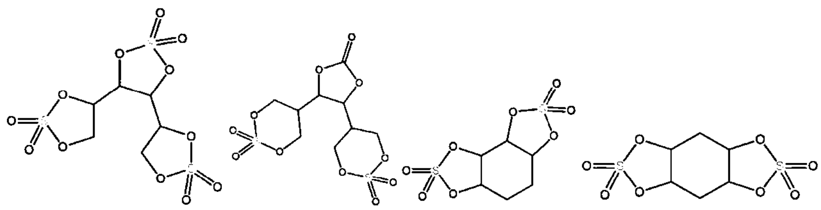

formula 1-11, formula 1-12, formula 1-13, or formula 1-14.

Sulfur-containing additives have a good film-forming ability, but will cause an excessive increase in impedance in the later stage of the cycling, which thus aggravates lithium plating, and severe lithium plating can result in gas generation from electrolyte decomposition and deteriorated cycling performance. It was found in research that the addition of a fluorosulfonamide solvent to the electrolyte enables the repairmen t of the SEI film during cycling, and the impedance of the SEI film formed therefrom is less than that of the SEI film formed from sulfur-containing additives, thereby improving the cycling performance. Moreover, in the later stages of the cycling, when other additives are nearly depleted, fluorosulfonamide solvents can undergo de fluorination reduction decomposition on the negative electrode, repairing cracked SEI films and generating a stable, low-impedance SEI film rich in LiF, which suppress the formation of lithium dendrites at the negative electrode and mitigates the decay in capacity retention, and extend the cycling life of lithium-ion batteries.

In some embodiments, the electrolyte further comprises a fluorosulfonamide solvent. The content of the fluorosulfonamide solvent in the electrolyte can be denoted as S wt %.

In some embodiments, 5 ≤ S ≤ 25, e.g., 5, 6, 8, 10, 12, 14, 16, 18, 20, 22, 24, or 25.

In some embodiments, 6 ≤ S+A ≤ 28, e.g., 6, 8, 10, 12, 14, 16, 18, 20, 22, 24, 26, or 28. Since both the sulfur-containing additive and the fluorosulfonamide solvent have a good film-forming ability, controlling their total content in an appropriate amount range enables the lithium-ion battery to have a better cycling life and suppression of self-discharge of

the lithium-ion battery; however, when both the sulfur-containing additive and the fluorosulfonamide solvent are added in a higher amounts, their strong film-forming properties results in excessive consumption of electrolyte, which deteriorates the cycling life of lithium-ion batteries.

In some embodiments, 3≤S/A≤20, e.g., 3, 4, 6, 8, 10, 12, 14, 16, 18, or 20. When S is relatively small and A is relatively large, the impedances of the electrolyte and the formed SEI film increase, deteriorating the kinetic performance of the lithium-ion battery. When S is relatively large and A is relatively small, the addition amount of the sulfur-containing additive makes it impossible to form a good CEI film at the positive electrode, such that the short-circuit issue of the battery cannot be effectively suppressed, and the suppression effect on gas generation at high temperatures is limited, resulting in a poor thermal safety performance of lithium-ion batteries.

In some embodiments, the lithium-ion battery satisfies at least one of the following relationships (a) - (c):

$$(a)\ 5 \le S \le 25;$$

$$(b)\ 6 \le S + A \le 28;$$

or

$$(c)\ 3 \le S/A \le 20.$$

In some embodiments, the fluorosulfonamide solvent comprises a compound represented by formula 2,

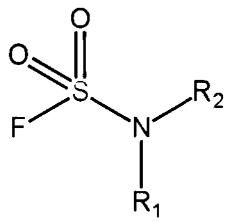 formula 2,

wherein $R_1$ and $R_2$ are each independently substituted or unsubstituted C1-C2 alkyl, or $R_1$ and $R_2$, together with N to which they are attached, form a ring, and if substituted, the substituent is F.

In the present invention, C1-C2 alkyl may be methyl, or ethyl; and $R_1$ and $R_2$, together with N to which they are attached, form a ring, that is, $R_1$ and $R_2$ are connected to form a ring together with N to which they are both attached. This ring can be a five-membered ring or a six-membered ring.

In some embodiments, the fluorosulfonamide solvent comprises at least one of compounds represented by formula 2-1 through formula 2-10:

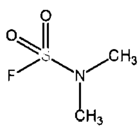 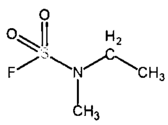 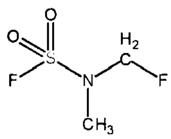 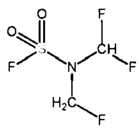 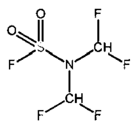

formula 2-1, formula 2-2, formula 2-3, formula 2-4, formula 2-5,

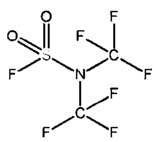 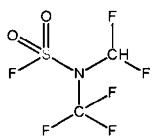 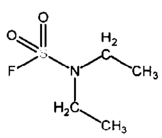 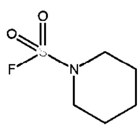 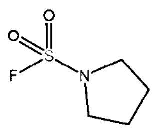

formula 2-6, formula 2-7, formula 2-8, formula 2-9, or formula 2-10.

In some embodiments, the electrolyte further comprises a lithium salt, other functional additives and other solvents.

In some embodiments, the lithium salt comprises at least one of lithium hexafluorophosphate ($LiPF_6$), lithium difluorophosphate ($LiPO_2F_2$), lithium difluoro(oxalato)borate (LiDFOB), lithium bis(trifluoromethanesulfonyl)imide (LiTFSI), lithium trifluoromethanesulfonate, lithium difluorobis(oxalato)phosphate, lithium tetrafluoroborate ($LiBF_4$), lithium bis(oxalato)borate, lithium hexafluoroantimonate ($LiSbF_6$), lithium hexafluoroarsenate ($LiAsF_6$), lithium bis(pentafluoroethanesulfonyl)imide, lithium tris(trifluoromethanesulfonyl)methide, lithium bis(difluorophosphoryloxy)difluoroborate, lithium tetrakis(difluorophosphoryloxy)borate, or lithium bis(trifluoromethanesulfonyl)imide.

In some embodiments, the lithium salt comprises 12-28 wt% of the total mass of the electrolyte, for example, 12 wt%, 13 wt%, 14 wt%, 15 wt%, 16 wt%, 17 wt%, 18 wt%, 19 wt%, 20 wt%, 22 wt%, 24 wt%, 26 wt%, or 28 wt%.

In some embodiments, the other functional additives include at least one of vinylene carbonate (VC), vinyl ethylene carbonate, ethylene sulfate, succinonitrile (SN), glutaronitrile, adiponitrile (ADN), pimelonitrile, suberonitrile, sebaconitrile, 1,3,6-hexanetricarbonitrile (HTCN), ethylene glycol bis(propionitrile)ether (DENE), glycerol tricarbonitrile (TCP), tetravinylsilane (TVS), tris(trimethylsilyl)borate (TMSB), hexamethyldisilazane (HMDS), 1,2-bis(2-cyanoethoxy) ethane, fluorobenzene (FB), triphenyl phosphite (TPPi), and pentafluoroethoxy cyclotriphosphazene (PFPN).

In some embodiments, the other functional additives are added in an amount of 0.1-8 wt% of the total mass of the electrolyte, for example, 0.1 wt%, 0.5 wt%, 1 wt%, 2 wt%, 3 wt%, 4 wt%, 5 wt%, 6 wt%, 7 wt%, or 8 wt%.

In some embodiments, the other solvents include carbonates and/or carboxylates.

In some embodiments, the carbonates include at least one of ethylene carbonate (EC), fluoroethylene carbonate (FEC), propylene carbonate (PC), dimethyl carbonate (DMC), diethyl carbonate (DEC), or ethyl methyl carbonate (EMC).

In some embodiments, the carboxylates include at least one of ethyl acetate (EA), propyl acetate (PA), n-butyl acetate, isobutyl acetate, n-amyl acetate, isoamyl acetate, methyl propionate (MP), ethyl propionate (EP), propyl propionate (PP), methyl butyrate (MB), ethyl butyrate, or ethyl n-butyrate.

In some embodiments, the other solvents comprise 30-80wt% of the total mass of the electrolyte, for example, 30 wt%, 35 wt%, 40 wt%, 45 wt%, 50 wt%, 55 wt%, 60 wt%, 65 wt%, 70 wt%, 75 wt%, or 80 wt%.

In some embodiments, the cell is a wound cell. For example, as shown in FIG. 1, the cell is formed by winding a positive electrode plate 1, a separator 2, and a negative electrode plate 3 that are stacked.

In the present invention, the shapes of the protruding portions and recessed portions are not particularly limited. The projections thereof in the thickness direction of the electrode plate may be circular, triangular, square, rhombic, rectangular, oval, trapezoidal, hexagonal, etc. The distribution patterns are also not particularly limited and can be in an array distribution, for example, they can be distributed in an array in the length direction or the width direction of the positive electrode plate, or distributed in an array in a direction at a certain inclination angle to the length direction of the positive electrode plate, and they can be distributed throughout the entire positive electrode plate or in localized regions of the positive electrode plate, for example, as shown in FIGS. 2 and 3, the length direction of the positive electrode plate is indicated by x and the width direction by y, and the protruding portions are distributed in an array in the direction indicated by a, which is at a certain inclination angle to the direction indicated by x.

In some embodiments, the total area of the projection of the protruding portions is 2-85% of the total area of the positive electrode plate in the thickness direction of the positive electrode plate, e.g., 2%, 5%, 10%, 15%, 20%, 25%, 30%, 35%, 40%, 45%, 50%, 55%, 60%, 65%, 70%, 75%, 80%, or 85%, preferably 20% to 70%. There are gaps between two adjacent protruding portions, as indicated by W in FIG. 4. W can be measured as the shortest distance between the projections of the two protruding portions on the first surface of the positive electrode plate in the thickness direction of the positive electrode plate, and the person skilled in the art can determine the size of W based on the total area percentage of projection of the projections.

In some embodiments, the projection of the protruding portions is circular in the thickness direction of the positive electrode plate (e.g., the z-direction in FIG. 4).

In some embodiments, in the projection in the thickness direction of the positive electrode plate, the maximum length of the protruding portions is D mm, with $0.1 \leq D \leq 16$, for example, 0.1, 0.5, 1, 2, 4, 6, 8, 10, 12, 14, or 16. When the projection of the protruding portion is a circle, D is the diameter of the projected circle. The maximum length of the protruding portion is, for example, as shown in D in FIG. 4.

In some embodiments, the lithium-ion battery satisfies $1 \leq D \leq 8$.

In some embodiments, $0.1 \leq D \leq 16$, and/or, $3 \leq H \leq 30$. H and D in this range are conducive to the lithium-ion battery having a good liquid retention performance.

In some embodiments, $0.3 \leq Z = H/D \leq 80$, for example, 0.3, 1, 2, 4, 6, 8, 10, 12, 14, 16, 18, 20, 25, 30, 40, 60, or 80. When Z is too large, the protruding portions become sharper, and the positive electrode plate in this region is more prone to microcracks. The more numerous and deeper the microcracks, the more they exacerbate the dissolution of metal ions from the positive electrode material and deteriorate gas generation during the storage at a high temperature. Simultaneously, they promote the formation of lithium dendrites, which can more easily pierce the separator. When Z falls within this range, it helps mitigate the formation of microcracks in the lithium-ion battery, thereby reducing gas generation during the storage at a high temperature, while also enabling lithium-ion batteries to have both excellent liquid retention performance and safety.

In some embodiments, the lithium-ion battery satisfies $0.02 \leq A/Z \leq 4$, for example, 0.02, 0.05, 0.1, 0.5, 1, 1.5, 2, 2.5, 3, 3.5, or 4. When the A/Z is too small, the sulfur-containing additive is insufficient to effectively fill or cover the

microcrack surface of the protruding portions, and thus cannot effectively mitigate the problems such as gas generation during the storage at a high temperature and the formation of lithium dendrites. When the relationship between A and Z satisfies this range, the addition of the sulfur-containing additive to the electrolyte enables the oxidization at the positive electrode, filling or covering of these microcrack surfaces, thereby suppressing the dissolution of metal ions caused by the cracks, mitigating gas generation during the storage at a high temperature, and further decreasing the deposition of lithium metal on the negative electrode, while taking into account the cycling performance of the lithium-ion battery.

In some embodiments, the positive electrode plate includes a positive electrode current collector and a positive electrode active material layer located on one or both surfaces of the positive electrode current collector, wherein the positive electrode active material layer comprises a positive electrode active material, a conductive agent, and a binder.

In some embodiments, the positive electrode active material layer comprises the following components: in percentage by mass, 90-99.2 wt% of a positive electrode active material, 0.4-5 wt% of a conductive agent, and 0.4-5 wt% of a binder.

In some embodiments, the negative electrode active material layer comprises the following components: in percentage by mass, 90-99.2 wt% of a negative electrode active material, 0.3-5 wt% of a conductive agent, and 0.5-5 wt% of a binder.

In some embodiments, the conductive agent comprises, but not limited to, at least one of conductive carbon black, acetylene black, Ketjen black, conductive graphite, conductive carbon fiber, carbon nanotube, or metal powder.

In some embodiments, the adhesive comprises, but not limited to, one or more of a styrene-butadiene rubber emulsion, a polytetrafluoroethylene emulsion, sodium carboxymethyl cellulose, sodium alginate, polyvinyl alcohol, polyacrylic acid, lithium polyacrylate, sodium polyacrylate and carboxylated chitosan.

In some embodiments, the positive electrode active materials selected from at least one of lithium transition metal oxides, lithium iron phosphate, lithium iron manganese phosphate, lithium manganese oxide, or lithium-rich manganese oxide. The lithium transition metal oxide has the chemical formula of $Li_{(1+x)}Ni_yCo_zM_{(1-y-z)}O_2$, where $-0.1 \leq x \leq 1$ (e.g., -0.1, 0, 0.1, 0.2, 0.3, 0.4, 0.5, 0.6, 0.7, 0.8, 0.9, or 1); $0 \leq y \leq 1$ (e.g., 0, 0.1, 0.2, 0.3, 0.4, 0.5, 0.6, 0.7, 0.8, 0.9, or 1); $0 \leq z \leq 1$ (e.g., 0, 0.1, 0.2, 0.3, 0.4, 0.5, 0.6, 0.7, 0.8, 0.9, or 1); and $0 \leq y + z \leq 1$ (e.g., 0, 0.1, 0.2, 0.3, 0.4, 0.5, 0.6, 0.7, 0.8, 0.9, or 1). Here, M is at least one of Mg, Zn, Ga, Ba, Al, Fe, Cr, Sn, V, Mn, Sc, Ti, Nb, Mo, or Zr.

In some embodiments, the positive electrode current collector may be a positive electrode current collector conventionally used in the art, such as an aluminum foil or a composite current collector.

In some embodiments, the negative electrode plate comprises a negative electrode active material layer.

In some embodiments, the negative electrode active material layer comprises a negative electrode active material.

Because fluorosulfonamide solvents can repair the SEI during the cycling process of a battery and the impedance of the SEI formed thereby is relatively low, when combined with silicon-based electrodes, not only can the energy density be increased, but also due to their good kinetics and film-forming ability, they can continuously repair the cracking of the SEI film after the expansion of silicon-based materials, and reduces the impedance of the SEI film, thereby suppressing the expansion of the silicon-based negative electrode and mitigating side reactions, avoiding the premature deactivation of silicon particles, and extending the cycling life of silicon particles. The recessed portions on the positive electrode plate can serve as space for storing electrolyte, continuously providing electrolyte, and improving the cycling life of the silicon negative electrode. The pre-deformation of the positive electrode plate allows the positive electrode plate to be more resistant to deformation, while the gap formed by the protruding portions also provides sufficient space for expansion of the silicon negative electrode.

In some embodiments, the negative electrode active material comprises a silicon element.

In some embodiments, the content of the silicon element in the negative electrode active material is B wt% and satisfies $5 \leq B \leq 50$, for example, 5, 10, 15, 20, 25, 30, 35, 40, 45, or 50. When the doping amount of the silicon is too small, the energy density improvement of the negative electrode plate is limited. When the doping amount of the silicon is too high, the silicon particles become more densely distributed, which can easily lead to higher local self-discharge rates, localized lithium plating, and excessive battery expansion during cycling.

In some embodiments, $0.5 \leq B/A \leq 20$, for example, 0.5, 1, 2, 4, 6, 8, 10, 12, 14, 16, 18, or 20.

In some embodiments, the lithium-ion battery satisfies $5 \leq B \leq 50$, and/or, $0.5 \leq B/A \leq 20$.

In some embodiments, the silicon element is present in the form of a silicon-based material, and the silicon-based material may include at least one of nano-silicon, a silicon-oxygen material ($SiO_x$, $0 < x < 2$), or a silicon-carbon material.

In some embodiments, the negative electrode active material further includes a carbon-based material, and the carbon-based material may include at least one of artificial graphite, natural graphite, mesocarbon microbeads, hard carbon, or soft carbon.

In some embodiments, that negative electrode plate includes a negative electrode current collector and a negative electrode active material layer located on one side or both sides of the negative electrode current collector.

In some embodiments, that negative electrode active material layer further includes a conductive agent and a binder. For the types of the conductive agent and the binder, reference can be made to those described in the section on the

positive electrode active material layer.

In some embodiments, the negative electrode active material layer comprises 80-99.8 wt % of a negative electrode active material, 0.1-10 wt % of a conductive agent, and 0.1-10 wt % of a binder.

In some embodiments, the negative electrode active material layer comprises 90-99.6 wt % of a negative electrode active material, 0.2-5 wt % of a conductive agent, and 0.2-5 wt % of a binder.

The negative electrode current collector may be a negative electrode current collector commonly used in the art, such as a copper foil or a composite current collector.

In some embodiments, the lithium-ion battery may further comprise a case that encapsulates the cell, and the case can be made of, for example, an aluminum-plastic film.

Unless otherwise specified, other options for the lithium-ion battery are conventional options in the art. The lithium-ion battery can be assembled in accordance with conventional methods in the art.

The technical solutions of the embodiments of the present invention will be clearly and completely described combined with the embodiments of the present invention as below, clearly, the embodiments described are merely a part of the embodiments of the present invention rather than all of the embodiments of the present invention. Based on the examples in the present disclosure, all other examples obtained by those of ordinary skill in the art without involving creative effort belong to the scope of protection of the present disclosure.

The materials, reagents, etc. used in the following examples are all commercially available, unless otherwise specified.

The present invention will be described below in detail combined with specific examples, which are intended to understand but not to limit the present invention.

Example 1

(1) Preparation of negative electrode plate

A negative electrode active material (composed of 85 wt% graphite + 15 wt% of the silicon-carbon material), a styrene-butadiene rubber (SBR), lithium polyacrylate, conductive carbon black (SP) and carbon nanotubes (CNT) were mixed until uniform at a mass ratio of 96.5:1.5:0.5:1.0:0.5, then an appropriate amount of deionized water was added stepwise to obtain a negative electrode slurry under the action of a vacuum mixer. The negative electrode active slurry was uniformly coated on both surfaces of a copper foil using a coating machine. The coated copper foil was dried and then subjected to processes of rolling, slitting, etc., to obtain the desired negative electrode plate. The content of the silicon element in the negative electrode active material is about 9 wt%, that is, B is 9.

(2) Preparation of positive electrode plate

A commercial lithium cobalt oxide ($LiCoO_2$) material, polyvinylidene fluoride (PVDF), SP and carbon nanotubes (CNT) were dry-blended at a mass ratio of 96.0:2.0:1.5:0.5. Then an appropriate amount of N-methylpyrrolidone (NMP) was added stepwise and mixed under the action of a vacuum mixer to form a homogeneous slurry. Subsequently, the positive electrode active slurry was uniformly coated on both surfaces of an aluminum foil using a coating machine. The coated positive electrode current collector was dried, and then subjected to processes of rolling, slitting, embossing, etc., to obtain the desired positive electrode plate. The distribution of the protruding portions 14 on the positive electrode plate was as shown in FIG. 3. As shown in FIG. 4, embossing was such that a plurality of protruding portions 14 were present on the first surface 11 of the positive electrode plate and recessed portions 15 corresponding to the protruding portions were present on the second surface 13, the positive electrode current collector 12 was an aluminum foil, and the projection of the protruding portions 14 in the thickness direction z of the positive electrode plate was circular, with a height of 20 μm (i.e., H = 20), a diameter of 2 mm (i.e., D = 2), and Z = H/D = 10. In the direction of the thickness of the positive electrode plate, the total area of the projection of the protruding portions accounts for 45% of the total area of the positive electrode plate.

(3) Formulation of electrolyte solution

In a glove box filled with argon ($H_2O$<0.1ppm, and $O_2$<0.1ppm), the desired mass of each component was calculated according to the total mass of electrolyte, and 10% of ethylene carbonate (EC), 10% of fluoroethylene carbonate (FEC), 40% of n-propyl propionate (PP) and 15% of N,N-dimethylaminosulfonyl fluoride (Formula 2-1) based on the total mass of the electrolyte were added. 15 wt% of $LiPF_6$and 5 wt% of LiTFSI based on the total mass of the electrolyte were then rapidly added thereto. After the dissolution, 2.0 wt% of HTCN, 1.0 wt% of VC, and 2.0 wt% of 1,3-propane sultone (formula 1-1) based on the total mass of the electrolyte were added. After stirring until uniform, the mixture passed the tests of moisture, free acid and chromaticity and was confirmed to meet specifications, then the desired electrolyte solution was obtained. That is, A was 2 and S was 15 in the electrolyte. H/A was 10, S+A was 17, S/A was 7.5,

A/Z was 0.2, and B/A was 4.5.

(4) Preparation of lithium-ion battery

As shown in FIG. 1, a negative electrode plate 3 prepared in the above step, a commercial separator 2 (with a thickness of 8 μm, that is, T = 8), and a positive electrode plate 1 prepared in the above step were stacked in a way such that the separator 2 completely isolated the positive electrode plate 1 from the negative electrode plate 3, while the negative electrode active material layer completely covered the positive electrode active material layer. Then, the assembly was wound to obtain a roll core with a certain thickness and width. Then, the material was packaged using an aluminum plastic film and injected with the electrolyte solution prepared in the previous step, followed by the procedures of encapsulation under vacuum, ageing, formation, shaping, sorting, etc. to yield a soft-pack lithium-ion battery with certain specifications. The prepared lithium ion had a voltage test window of 3.0 - 4.53 V. H/T was 2.5.

Example group 2 and Comparative Example group 1

The operation was carried out according to the method described in Example 1, except that the height H of the protruding portions and the thickness T of the separator were different, as detailed in Table 1.

Table 1

| Group | H | D | Z | T | H/T | A | H/A | A/Z |
|---|---|---|---|---|---|---|---|---|
| Example 1 | 20 | 2 | 10 | 8 | 2.50 | 2 | 10 | 0.20 |
| Example 2-1 | 5 | * | 2.5 | * | 0.63 | * | 2.5 | 0.8 |
| Example 2-2 | 15 | * | 7.5 | * | 1.88 | * | 7.5 | 0.27 |
| Example 2-3 | 25 | * | 12.5 | * | 3.13 | * | 12.5 | 0.16 |
| Example 2-4 | 35 | * | 17.5 | * | 4.38 | * | 17.5 | 0.11 |
| Example 2-5 | 45 | * | 22.5 | * | 5.63 | * | 22.5 | 0.09 |
| Example 2-6 | * | * | * | 6 | 3.33 | * | * | * |
| Example 2-7 | * | * | * | 10 | 2.00 | * | * | * |
| Example 2-8 | * | * | * | 13 | 1.54 | * | * | * |
| Comparative Example 1-1 | 2 | * | 1 | * | 0.25 | * | 1 | 2 |
| Comparative Example 1-2 | 40 | * | 20 | 5 | 8.00 | * | 20 | 0.1 |
| Notes: "*" indicates the same as Example 1. | | | | | | | | |

Example group 3

The operation was carried out according to the method described in Example 1, except that the height H of the protruding portions and the diameter D of the protruding portions were different, as detailed in Table 2.

Table 2

| Group | H | D | Z | H/T | A | H/A | A/Z |
|---|---|---|---|---|---|---|---|
| Example 1 | 20 | 2 | 10 | 2.50 | 2 | 10 | 0.20 |
| Example 3-1 | * | 0.2 | 100 | * | * | * | 0.02 |
| Example 3-2 | * | 0.5 | 40 | * | * | * | 0.05 |
| Example 3-3 | * | 1 | 20 | * | * | * | 0.1 |
| Example 3-4 | * | 5 | 4 | * | * | * | 0.5 |
| Example 3-5 | * | 10 | 2 | * | * | * | 1 |

(continued)

| Group | H | D | Z | H/T | A | H/A | A/Z |
|---|---|---|---|---|---|---|---|
| Example 3-6 | 3 | 15 | 0.2 | 0.38 | * | 1.5 | 10 |
| Notes: "*" indicates the same as Example 1. | | | | | | | |

Example group 4 and Comparative Example group 2

The operation was carried out according to the method described in Example 1, except that the height H of the protruding portions and the content A of the sulfur-containing additives were different, as detailed in Table 3.

Table 3

| Group | H | Z | H/T | A | H/A | S | S+A | S/A | A/Z | B | B/A |
|---|---|---|---|---|---|---|---|---|---|---|---|
| Example 1 | 20 | 10 | 2.50 | 2 | 10 | 15 | 17 | 7.5 | 0.20 | 9 | 4.5 |
| Example 4-1 | * | * | * | 0.2 | 100 | * | 15.2 | 75 | 0.02 | * | 45 |
| Example 4-2 | * | * | * | 1 | 20 | * | 16 | 15 | 0.1 | * | 9 |
| Example 4-3 | * | * | * | 3 | 6.67 | * | 18 | 5 | 0.3 | * | 3 |
| Example 4-4 | * | * | * | 5 | 4 | * | 20 | 3 | 0.5 | * | 1.8 |
| Example 4-5 | 30 | 15 | 3.75 | 0.2 | 150 | * | 15.2 | 75 | 0.01 | * | 45 |
| Example 4-6 | 3 | 1.5 | 0.38 | * | 1.5 | * | 17 | 7.5 | 1.33 | * | 4.5 |
| Comparative Example 2-1 | * | * | * | 0.05 | 400 | * | 15.05 | 300 | 0.01 | * | 180 |
| Comparative Example 2-2 | * | * | * | 7 | 2.86 | * | 22 | 2.143 | 0.7 | * | 1.3 |
| Comparative Example 2-3 | * | * | * | 0 | / | * | 15 | / | 0 | * | / |
| Notes: "*" indicates the same as Example 1, and "/" indicates absence. | | | | | | | | | | | |

Example group 5

The operation was carried out according to the method described in Example 1, except that the content S of the fluorosulfonamide solvent was different, as detailed below.

Example 5-1: S was 0, that is, no fluorosulfonamide solvent was added, S+A was 2, and S/A was 0.

Example 5-2: S was 2, S+A was 4, and S/A was 1.

Example 5-3: S was 8, S+A was 10, and S/A was 4.

Example 5-4: S was 22, S+A was 24, and S/A was 11.

Example 5-5: S was 28, S+A was 30, and S/A was 14.

Example group 6

The operation was carried out according to the method described in Example 1, except that the content B of the silicon element of the negative electrode active material was different, as detailed below.

Example 6-1: B was 5 and B/A was 2.5.

Example 6-2: B was 20 and B/A was 10.

Example 6-3: B was 30 and B/A was 15.

Example 6-4: B was 40 and B/A was 20.

Example group 7

The operation was carried out according to the method described in Example 1, except that the types of sulfur-containing additives and fluorosulfonamide solvents were different, as detailed in Table 4.

Table 4

| Group | Sulfur-containing additive | Fluorosulfonamide solvent |
|---|---|---|
| Example 1 | Compound of formula 1-1 | Compound of formula 2-1 |
| Example 7-1 | Compound of formula 1-2 | * |
| Example 7-2 | Compound of formula 1-3 | * |
| Example 7-3 | Compound of formula 1-6 | * |
| Example 7-4 | Compound of formula 1-9 | * |
| Example 7-5 | * | Compound of formula 2-2 |
| Example 7-6 | * | Compound of formula 2-3 |
| Example 7-7 | * | Compound of formula 2-8 |
| Example 7-8 | * | Compound of formula 2-10 |
| Notes: * indicates the same as Example 1. | | |

Test examples

Performance test was conducted on the lithium-ion batteries prepared in the examples and comparative examples. The specific test methods were as follows, and the results were shown in Table 5-1 and Table 5-2.

(1) Cycling performance test: In a thermostat at 25°C, the battery was charged stepwise at an initial rate of 3C to the upper limit voltage, followed by constant-voltage charging until the current dropped to 0.05C, which was a charging process, and after charging was completed, the battery was left to stand for 10 min, and then discharged at rate of 0.7C to 3.0 V. A charge-discharge process was a cycle. The maximum discharge capacity from the first three cycles was taken as the initial capacity, and the percentage of the discharge capacity at a specific cycle to the initial discharge capacity was the capacity retention rate up to that cycle.

After 500 cycles, the discharge capacity was recorded, and the capacity retention rate after 500 cycles was calculated.

(2) Lithium plating: After 500T cycles, the battery was fully charged and disassembled, and the lithium plating at the arc of the negative electrode plate was observed. Only small spot-like or slight gray lithium plating appears, which is minor arc lithium plating. Obvious silver lithium plating can be observed, and the plated lithium connected into streaks, which were moderately severe arc lithium plating. Lithium plating can be clearly observed not only at the arc, but also around the arc, that is, when lithium plating spreads from the arc area to the periphery, it is considered severe arc lithium plating. There is only golden negative electrode powder at the arc of the negative electrode plate, and the corresponding separator region is only white, which is determined as no lithium plating.

(3) Self-discharge performance test: The lithium-ion battery sorted out of stage was measured for the open circuit potential yielding V1, and left to stand for 24 h, the battery was measured for the open circuit potential again yielding V2, and the K-value of the battery was obtained by dividing the difference between V1 and V2 by the standing time.

(4) Storage test at 85°C for lithium-ion battery: The lithium-ion battery was fully charged and placed in a thermostat at 85°C and the thickness of the battery was measured every 4 h until the thickness of the battery expanded more than 20% of the initial thickness. The percentage of the difference between the thickness of the stored battery and the initial thickness of the battery relative to the initial thickness of the battery is expressed as the expansion rate of the battery thickness. The duration of storage until the expansion rate exceeds 20% is regarded as the full-charge storage life of the battery at 85°C.

Table 5-1

| Group | Capacity retention rate after 500T cycles | Lithium plating at negative electrode | K value | Full-charge storage life at 85°C |
|---|---|---|---|---|
| Example 1 | 92.4% | No lithium plating | 0.043 | 32h |
| Example 2-1 | 90.6% | No lithium plating | 0.035 | 40 h |
| Example 2-2 | 91.6% | No lithium plating | 0.041 | 32h |
| Example 2-3 | 91.8% | No lithium plating | 0.048 | 28h |
| Example 2-4 | 90.2% | No lithium plating | 0.067 | 24 h |
| Example 2-5 | 87.1% | Slight lithium | 0.084 | 20 h |

(continued)

| Group | Capacity retention rate after 500T cycles | Lithium plating at negative electrode | K value | Full-charge storage life at 85°C |
|---|---|---|---|---|
| | | plating | | |
| Example 2-6 | 90.7% | No lithium plating | 0.061 | 28h |
| Example 2-7 | 91.2% | No lithium plating | 0.032 | 32h |
| Example 2-8 | 86.6% | Slight lithium plating | 0.03 | 44h |
| Comparative example 1-1 | 74.6% | Severe lithium plating | 0.031 | 40 h |
| Comparative Example 1-2 | Not detected | Not detected | 3.61 | Not detected |
| Example 3-1 | 83.8% | Slight lithium plating | 0.093 | 20 h |
| Example 3-2 | 86.7% | Slight lithium plating | 0.074 | 20 h |
| Example 3-3 | 91.5% | No lithium plating | 0.062 | 24 h |
| Example 3-4 | 91.9% | No lithium plating | 0.042 | 32h |
| Example 3-5 | 88.5% | No lithium plating | 0.036 | 36h |
| Example 3-6 | 84.3% | Slight lithium plating | 0.033 | 36h |
| Example 4-1 | 86.7% | Slight lithium plating | 0.062 | 16 h |
| Example 4-2 | 90.3% | No lithium plating | 0.058 | 24 h |
| Example 4-3 | 90.7% | No lithium plating | 0.037 | 36h |
| Example 4-4 | 87.9% | Slight lithium plating | 0.034 | 40 h |
| Example 4-5 | 82.7% | Moderately severe lithium plating | 0.088 | 12 h |
| Example 4-6 | 82.2% | Moderately severe lithium plating | 0.041 | 36h |
| Comparative Example 2-1 | 78.3% | Severe lithium plating | 0.49 | 8h |
| Comparative Example 2-2 | 77.1% | Severe lithium plating | 0.033 | 44h |
| Comparative example 2-3 | 75.6% | Severe lithium plating | 0.77 | 4h |

Table 5-2

| Group | Capacity retention rate after 500T cycles | Lithium plating at negative electrode | K value | Full-charge storage life at 85°C |
|---|---|---|---|---|
| Example 1 | 92.4% | No lithium plating | 0.043 | 32h |
| Example 5-1 | 81.8% | Moderately severe lithium plating | 0.045 | 28h |
| Example 5-2 | 82.5% | Moderately severe lithium plating | 0.044 | 28h |
| Example 5-3 | 90.5% | No lithium plating | 0.042 | 32h |
| Example 5-4 | 91.2% | No lithium plating | 0.045 | 32h |
| Example 5-5 | 84.4% | Moderately severe lithium plating | 0.046 | 32h |
| Example 6-1 | 91.8% | No lithium plating | 0.042 | 36h |
| Example 6-2 | 89.1% | No lithium plating | 0.047 | 28h |
| Example 6-3 | 82.4% | Moderately severe lithium plating | 0.051 | 28h |
| Example 6-4 | 80.5% | Moderately severe lithium plating | 0.057 | 24 h |
| Example 7-1 | 89.9% | No lithium plating | 0.041 | 28h |
| Example 7-2 | 90.3% | No lithium plating | 0.043 | 28h |
| Example 7-3 | 90.6% | No lithium plating | 0.044 | 28h |

(continued)

| Group | Capacity retention rate after 500T cycles | Lithium plating at negative electrode | K value | Full-charge storage life at 85°C |
|---|---|---|---|---|
| Example 7-4 | 92.3% | No lithium plating | 0.045 | 24 h |
| Example 7-5 | 91.0% | No lithium plating | 0.043 | 32h |
| Example 7-6 | 92.1% | No lithium plating | 0.042 | 32h |
| Example 7-7 | 89.6% | No lithium plating | 0.043 | 32h |
| Example 7-8 | 89.7% | No lithium plating | 0.04 | 32h |

It should be noted that, as used herein, terms "comprise", "include", or any other variants thereof are intended to encompass a non-exclusive inclusion such that a process, method, article, or device which includes a series of elements not only includes these very elements, but may also include other elements not expressly listed, or also include elements inherent to this process, method, article, or device. Without being subject to further limitations, an element defined by a phrase "including ..." does not exclude presence of other identical elements in the process, method, article, or device which includes the element. Furthermore, it should be noted that the scopes of the methods and devices in the embodiments of the present application are not limited to performing functions in the order shown or discussed, but may also include performing functions in a substantially simultaneous manner or in a reverse order depending on the functions involved. For example, the described method may be performed in an order different from that described, and various steps may be added, omitted, or combined. Additionally, features described with reference to some examples may be combined in other examples.

The above descriptions are merely preferred embodiments of the present invention but not intended to limit the present invention, and any modifications, equivalent replacements, etc. made within the spirit and principle of the present invention should be included within the scope of protection of the present invention.

**Claims**

1. A lithium-ion battery, **characterized in that** the lithium-ion battery comprises a cell and an electrolyte, wherein the cell comprises a positive electrode plate (1), a separator (2), and a negative electrode plate (3) that are stacked, wherein the positive electrode plate body (1) has a first surface (11) and a second surface (12) opposite to each other in a thickness direction, and the positive electrode plate (1) has a plurality of protruding portions (14) on the first surface (11) and recessed portions (15) corresponding to the protruding portions (14) on the second surface (12); and the electrolyte comprises A wt % of a sulfur-containing additive, which comprises at least one of a sulfonate, a sulfate, or a sulfite, with the lithium-ion battery satisfying $0.3 \leq H/T \leq 6$ and $0.1 \leq A \leq 6$;
   wherein H is a height of the protruding portion (14), in $\mu$m; and T is a thickness of the separator (2) in $\mu$m.

2. The lithium-ion battery according to claim 1, **characterized in that** $2 \leq H/A \leq 100$; and/or,
   $3 \leq H \leq 40$, preferably $3 \leq H \leq 30$; and/or,

$$5 \leq T \leq 12.$$

3. The lithium-ion battery according to claim 1 or 2, **characterized in that** in the projection in the thickness direction of the positive electrode plate (1), the maximum length of the protruding portion (14) is D mm, with $0.1 \leq D \leq 16$, preferably $1 \leq D \leq 8$; and/or,
   $0.3 \leq Z \leq 80$, wherein Z=H/D.

4. The lithium-ion battery according to claim 3, **characterized in that** the lithium-ion battery satisfies $0.02 \leq A/Z \leq 4$.

5. The lithium-ion battery according to any one of claims 1 to 4, **characterized in that** a projection area of the protruding portions (14) in the thickness direction of the electrode plate is 80% to 120% of a projection area of the recessed portions (15) in the thickness direction of the electrode plate; and/or,
   a total area of the projection of the protruding portions (14) is 2-85% of a total area of the positive electrode plate (1) in the thickness direction of the positive electrode plate.

6. The lithium-ion battery according to any one of claims 1 to 5, **characterized in that** the sulfur-containing additive is a cyclic sulfur-containing compound.

7. The lithium-ion battery according to any one of claims 1 to 6, **characterized in that** the sulfur-containing additive comprises at least one of compounds represented by formula 1-1 through formula 1-14;

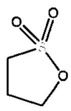 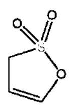 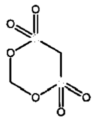 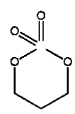 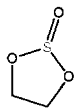 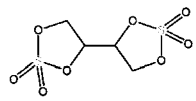

formula 1-1, formula 1-2, formula 1-3, formula 1-4, formula 1-5, formula 1-6,

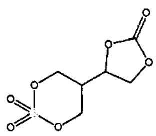 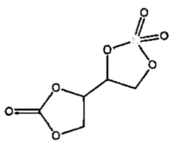 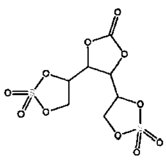 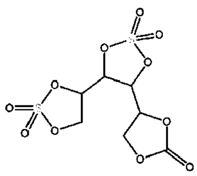

formula 1-7, formula 1-8, formula 1-9, formula 1-10,

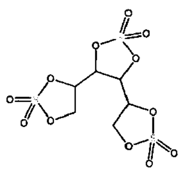 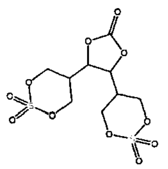 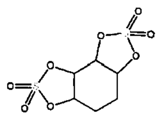 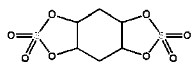

formula 1-11, formula 1-12, formula 1-13, or formula 1-14.

8. The lithium-ion battery according to any one of claims 1 to 7, **characterized in that** the electrolyte further comprises a fluorosulfonamide solvent, and the content of the fluorosulfonamide solvent in the electrolyte is S wt%; and the lithium-ion battery satisfies at least one of the following relationships (a) - (c):

$$(a)\ 5 \leq S \leq 25;$$

$$(b)\ 6 \leq S + A \leq 28;$$

or

$$(c)\ 3 \leq S/A \leq 20.$$

9. The lithium-ion battery according to claim 8, **characterized in that** the fluorosulfonamide solvent comprises a compound represented by formula 2,

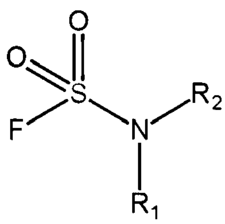 formula 2,

wherein $R_1$ and $R_2$ are each independently substituted or unsubstituted C1-C2 alkyl, and if substituted, the substituent is F; or,

$R_1$ and $R_2$, together with N to which they are attached, form a ring.

**10.** The lithium-ion battery according to claim 9, **characterized in that** C1-C2 alkyl is methyl, or ethyl; and/or, $R_1$ and $R_2$, together with N to which they are attached, form a five-membered ring or a six-membered ring.

**11.** The lithium-ion battery according to any one of claims 8 to 10, **characterized in that** the fluorosulfonamide solvent comprises at least one of compounds represented by formula 2-1 through formula 2-10:

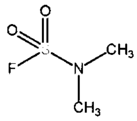 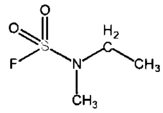 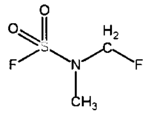 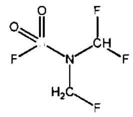 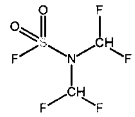

formula 2-1, formula 2-2, formula 2-3, formula 2-4, formula 2-5,

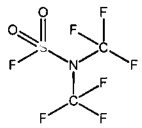 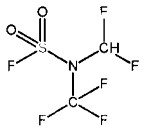 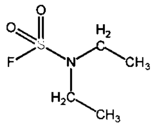 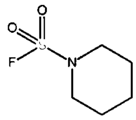 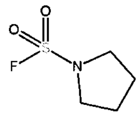

formula 2-6, formula 2-7, formula 2-8, formula 2-9, or formula 2-10.

**12.** The lithium-ion battery according to any one of claims 1 to 11, **characterized in that** the electrolyte further comprises other functional additives;
the other functional additives comprise at least one of vinylene carbonate, vinyl ethylene carbonate, ethylene sulfate, succinonitrile, glutaronitrile, adiponitrile, pimelonitrile, suberonitrile, sebaconitrile, 1,3,6-hexanetricarbonitrile, ethylene glycol bis(propionitrile)ether, glycerol tricarbonitrile, tetravinylsilane, tris(trimethylsilyl)borate, hexamethyldisilazane, 1,2-bis(2-cyanoethoxy)ethane, fluorobenzene, triphenyl phosphite, or pentafluoroethoxy cyclotriphosphazene; and/or, the other functional additives are added in an amount of 0.1-8 wt% of a total mass of the electrolyte.

**13.** The lithium-ion battery according to any one of claims 1 to 12, **characterized in that** the negative electrode plate (3) comprises a negative electrode active material layer, the negative electrode active material layer comprises a negative electrode active material, the negative electrode active material comprises a silicon element, and a content of the silicon element in the negative electrode active material is B wt%, satisfying $5 \leq B \leq 50$; and/or,

$$0.5 \leq B/A \leq 20.$$

**14.** The lithium-ion battery according to claim 13, **characterized in that** the silicon element is present in the form of a silicon-based material, and the silicon-based material comprises at least one of nano-silicon, a silicon-oxygen material of $SiO_x$ wherein $0 < x < 2$, or a silicon-carbon material; and/or,
the negative electrode active material further comprises a carbon-based material, and the carbon-based material comprises at least one of artificial graphite, natural graphite, mesocarbon microbeads, hard carbon, or soft carbon.

**15.** The lithium-ion battery according to any one of claims 1 to 14, **characterized in that** the cell is a wound cell.

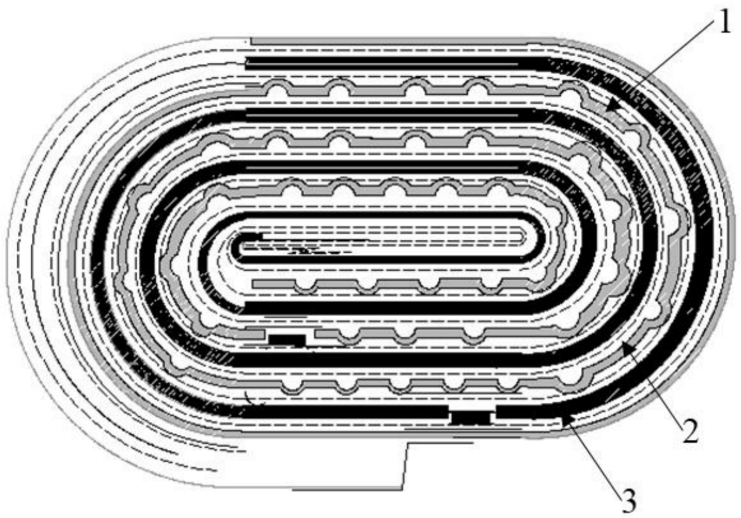


FIG. 1

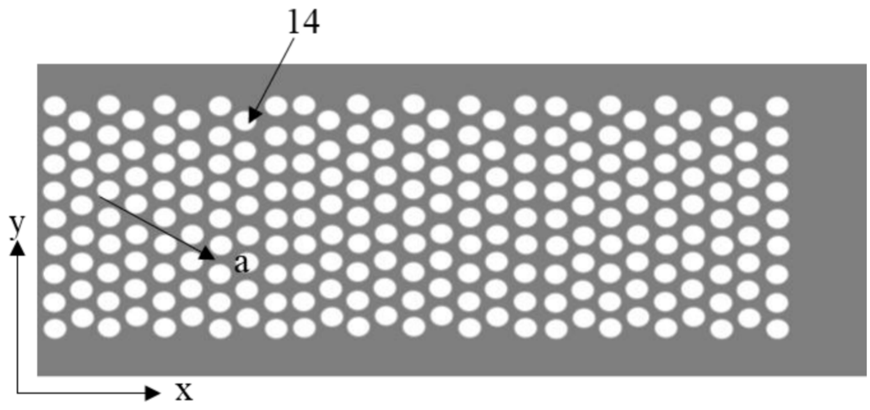


FIG. 2

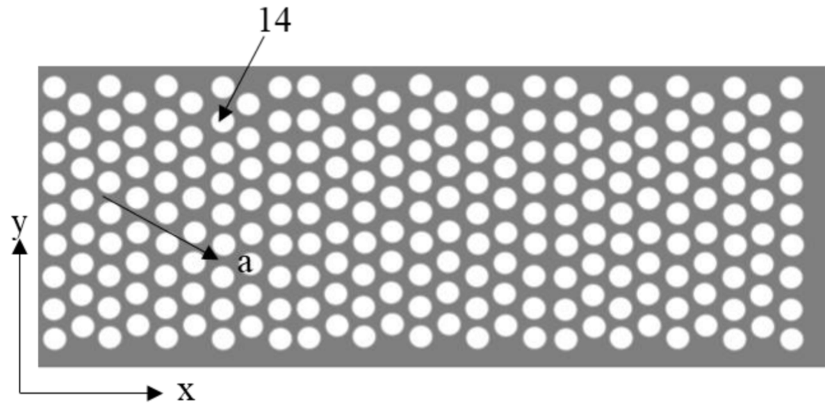


FIG. 3

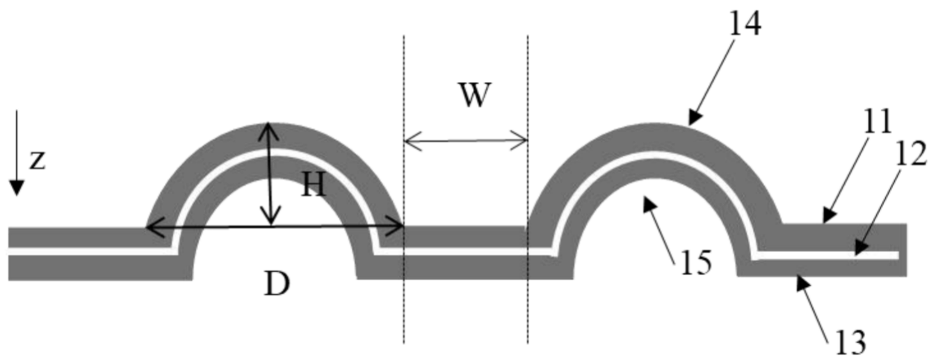


*FIG. 4*

Europäisches Patentamt
European Patent Office
Office européen des brevets

# EUROPEAN SEARCH REPORT

Application Number
EP 25 21 8217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 638 254 A (NINGDE AMPEREX TECHNOLOGY LTD) 1 March 2024 (2024-03-01) * claim 1 * ----- | 1-15 | INV. H01M4/13 H01M4/78 H01M10/0525 H01M10/0567 |
| A | CN 116 802 877 A (XIAMEN XINNENGAN TECH CO LTD) 22 September 2023 (2023-09-22) * claim 1 * ----- | 1-15 | |

TECHNICAL FIELDS SEARCHED (IPC)

H01M

The present search report has been drawn up for all claims

| Place of search | Date of completion of the search | Examiner |
|---|---|---|
| Munich | 7 April 2026 | Koessler, Jean-Luc |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 8217

This annex lists the patent family members relating to the patent documents cited in the above-mentioned European search report. The members are as contained in the European Patent Office EDP file on
The European Patent Office is in no way liable for these particulars which are merely given for the purpose of information.

07-04-2026

| Patent document cited in search report | Publication date | Patent family member(s) | Publication date |
|---|---|---|---|
| CN 117638254 A | 01-03-2024 | CN 117638254 A | 01-03-2024 |
| | | WO 2025157031 A1 | 31-07-2025 |
| CN 116802877 A | 22-09-2023 | CN 116802877 A | 22-09-2023 |
| | | CN 121748284 A | 27-03-2026 |
| | | US 2025174734 A1 | 29-05-2025 |
| | | WO 2024021033 A1 | 01-02-2024 |

EPO FORM P0459

For more details about this annex : see Official Journal of the European Patent Office, No. 12/82